# EUROPÄISCHE PATENTANMELDUNG

(11) **EP 0 551 057 A1**
(43) Veröffentlichungstag der Anmeldung: **14.07.1993**
(21) Anmeldenummer: 92811015.4
(22) Anmeldetag: 22.12.1992
(51) Int. Cl.: A62D 3/00, B09B 3/00

(54) **Verfahren und Vorrichtung zum kontinuierlichen Einschmelzen von Reststoffen**

(30) Priorität: 07.01.1992 CH 14/92
(71) Anmelder: Sulzer Chemtech AG, CH-8404 Winterthur (CH)
(72) Erfinder: Moergeli, Rudolf, CH-8708 Männedorf (CH); Schaub, Martin, CH-8483 Kollbrunn (CH)
(74) Vertreter: Hammer, Bruno, Dr.

(57) **Zusammenfassung**

Zum kontinuierlichen Einschmelzen werden Reststoffe (1), welche organische und anorganische Komponenten enthalten, in einer Heizeinrichtung (10) mit einem Einschmelztiegel (11) indirekt auf eine Temperatur TS aufgeheizt, wobei die organischen Komponenten durch Zugabe (41) eines reaktiven Vergasungsmittels (4) vergast und die produzierten Gase (46) abgezogen werden. Die verbleibenden anorganischen Reststoffe werden anschliessend im Tiegel (11) eingeschmolzen, über eine Leitung (16) abgezogen und durch Abkühlung in einen inerten, festen Endzustand (26) gebracht.

## Beschreibung

Die Erfindung betrifft ein Verfahren zum kontinuierlichen Einschmelzen von Reststoffen und Rückständen, welche organische und anorganische Komponenten enthalten, sowie eine Vorrichtung zur Ausführung des Verfahrens. Dies sind Reststoffe und Rückstände aus Industrie, Gewerbe und Haushalt, welche im besonderen auch Rückstände mit schwer zu inertisierenden Schadstoffen enthalten z.B. Filterasche und Schlacken aus Verbrennungsanlagen, Lackschlämme aus Lackierbetrieben, Filterpressen- und Galvanikschlämme und Rückstände aus Rauchgasreinigungen. Dabei müssen alle in den Reststoffen enthaltenen Schadstoffe vor allem Schwermetalle wie Quecksilber, Blei, Zink und Kadmium und organische Komponenten umgewandelt, inertisiert oder einer Wiederverwertung zugeführt werden. Schwermetalle wie Zink und Blei können einer Wiederverwertung zugeführt werden. Weitere schädlichen Komponenten der Reststoffe, z.B. auch giftige organische Komponenten wie Dioxine und Furane, müssen soweit inertisiert werden, dass sie deponiefähig sind, oder in harmlose Abgase wie Wasser und Kohlendioxid umgewandelt werden.

Bekannte Verfahren zur Inertisierung von Reststoffen sind z.B. Inklusionsverfahren oder Verglasung in grossen Wannen. Diese langsamen Glasschmelzverfahren sind z.B. im Abfallwirtschaftsjournal 1 (1989) Nr. 7/8, Seiten 27 bis 28 beschrieben. Andere Verfahren zur Entsorgung von organischen Reststoffen wie Pyrolyse und Verbrennung wiederum eignen sich schlecht, da ein schwer zu entsorgender Rückstand verbleibt. Mit den bekannten Verfahren ist es auch nicht möglich, in einem Prozess sowohl anorganische Giftstoffe wie Schwermetalle als auch entstehende organische Giftstoffe wie Dioxine und Furane zu entsorgen bzw. zu vernichten.

Aufgabe der vorliegenden Erfindung ist es daher, die Nachteile der bekannten Verfahren zu überwinden und ein Verfahren und eine Vorrichtung zur gleichzeitigen Entsorgung und Inertisierung aller Reststoffen zu schaffen, wobei diese anorganische und organische Komponenten enthalten. Diese Aufgabe wird gelöst durch das Verfahren nach Anspruch 1 und mittels einer Vorrichtung nach Anspruch 10. Durch indirekte Aufheizung unter Zugabe eines reaktiven Vergasungsmittels werden die organischen Bestandteile in energiereiche, weiter verwertbare Produktgase umgewandelt, während die verbleibenden anorganischen Reststoffe auf einfache Art durch relativ rasches Einschmelzen inertisiert werden. Die gleichzeitige Behandlung von organischen und anorganischen Komponenten in einem Prozess ist hier überdies auch besonders effizient und energetisch vorteilhaft. Dabei werden auch allfällig auftretende giftige organische Substanzen wie Dioxine und Furane durch die hohe Temperatur im Tiegel zerstört. Die abhängigen Ansprüche betreffen vorteilhafte Weiterbildungen der Erfindung. In einer vorgeschalteten Vorheizstufe kann die Vergasung der organischen Komponenten optimal kontrolliert ablaufen und anschliessend auch die anorganischen Komponenten rasch eingeschmolzen werden mit einer Verweilzeit im Tiegel, welche kleiner ist als die Durchlaufzeit durch die Vorheizstufe. Die Vergasungsprodukte können auch zum Aufheizen der Reststoffe eingesetzt werden, was energetisch besonders günstig ist. Es können verschiedene Vergasungsmittel wie Wasser, Luft, O₂ oder CO₂ mit Vorteil eingesetzt werden. Als besonders einfache Zuführungsform kann auch Wasser mit den Reststoffen z.B. als Slurry zugeführt werden. Ganz allgemein können als Vergasungsmittel z.B. auch heisse Verbrennungsgase aus Verbrennungsmotoren und Heizbrennern, welche meist weitgehend sauerstofffrei sind, Verwendung finden. Bei Anwendung einer Brennstoffheizung für den Tiegel können auch deren Rauchgase als Vergasungsmittel eingesetzt werden. Die Zuleitung des Vergasungsmittels in die Schmelze hinein kann eine besonders gute Durchmischung mit grosser Kontaktoberfläche ergeben. Durch Trennwände im Tiegel kann eine Reaktionszone von einer Beruhigungszone abgetrennt werden und damit die organische Reaktionszone einerseits und das Einschmelzen der anorganischen Komponenten anderseits besser ablaufen. Im Schmelztiegel können auch mindestens zwei separate Abführleitungen für verschieden schwere Schmelzeschichten vorgesehen sein, womit z.B. eine schwere metallische Schicht der Wiederverwertung zugeführt und eine leichtere glasartige Schicht inertisiert werden kann. Im folgenden wird die Erfindung anhand von Beispielen und Figuren weiter erläutert. Dabei zeigen:
- Fig. 1: Schematisch eine erfindungsgemässe Vorrichtung;
- Fig. 2: ein Beispiel mit Brennstoffheizung, Verwendung von deren Rauchgasen als reaktives Vergasungsmittel, sowie mit Verwendung der Produktgase zum Heizen und mit zwei Abführleitungen für zwei unterschiedliche Schmelzeschichten;
- Fig. 3: ein Beispiel mit einer Vorheizstufe und mit Einführung des Vergasungsmittels in die Schmelze.

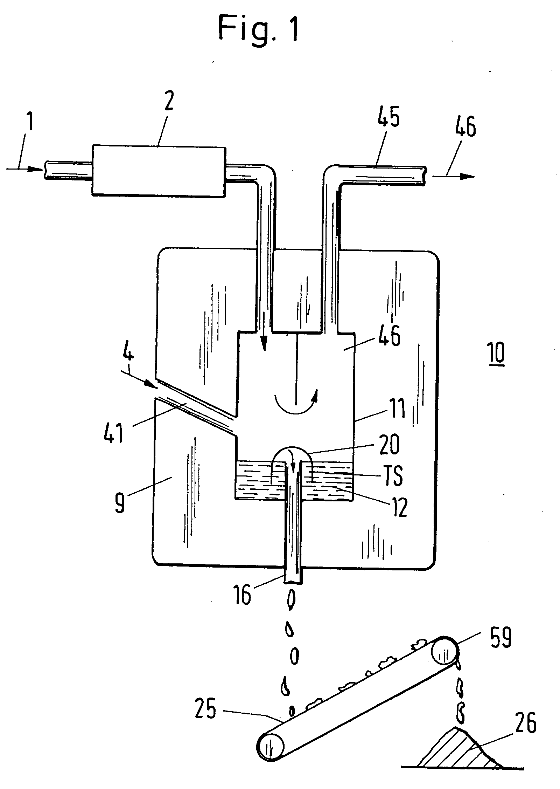

Die schematische Darstellung von Fig. 1 zeigt eine erfindungsgemässe Einschmelz- und Behandlungsvorrichtung mit einer Heizeinrichtung 10, in welcher die Reststoffe 1 über eine Dosiereinrichtung 2 in einen Einschmelztiegel 11 mit einer Heizung 9 zugeführt werden. Die reaktiven Vergasungsmittel 4 werden durch eine Zuführung 41 in den Tiegel 11 gefördert, wo die organischen Reststoffkomponenten vergast und die produzierten Gase 46 über die Leitung 45 abgeführt werden. Die verbleibenden anorganischen Reststoffe werden bei einer Temperatur TS aufgeschmolzen und als Schmelze 12 über eine Abführleitung 16 aus dem Tiegel herausgeführt in eine Kühlvorrichtung 25, hier in Form eines Plattenförderers 59, worauf sie als inertisierte, erstarrte oder allfällig weiter verwertbare Reststoffe 26 anfallen.

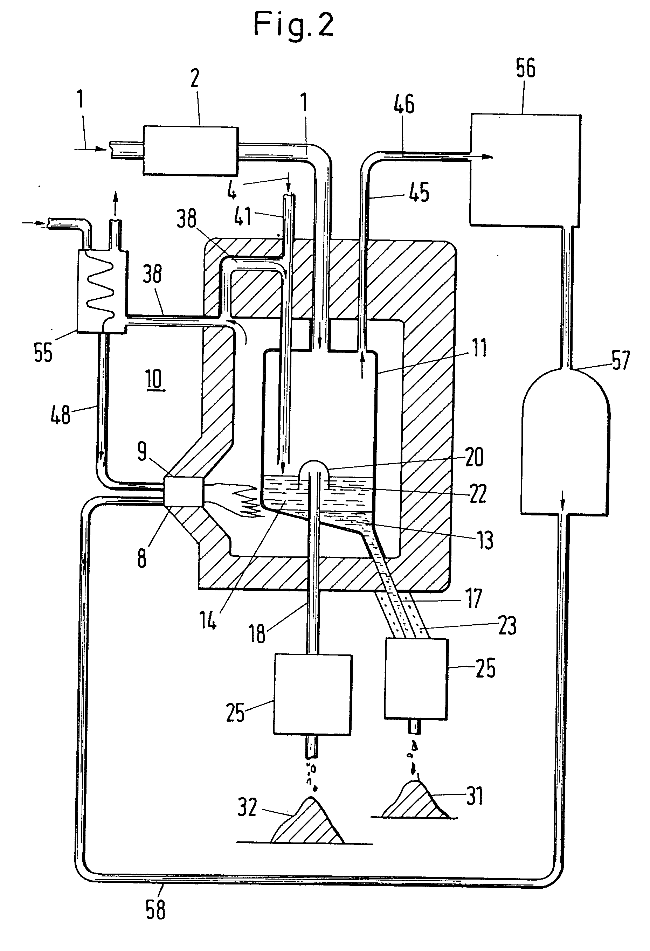

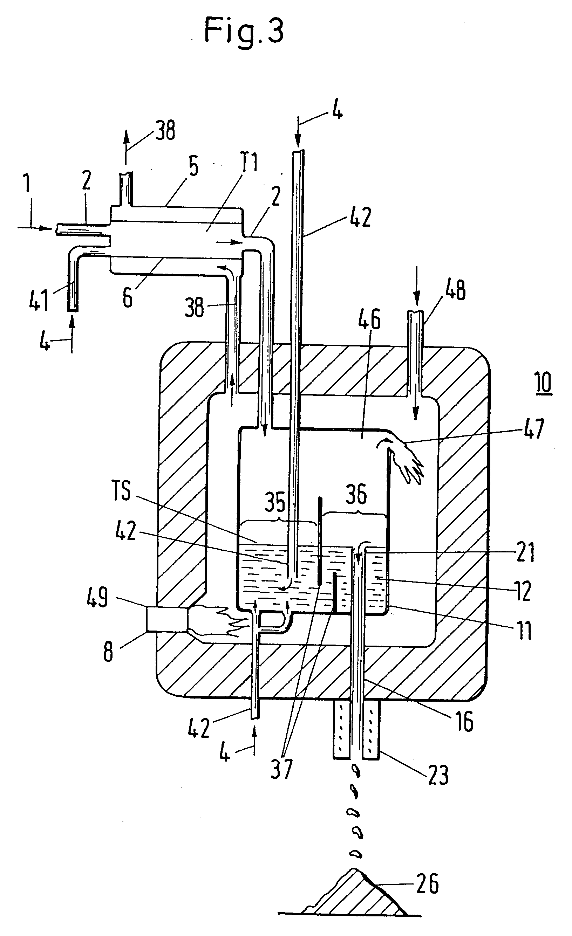

Im Beispiel von Fig. 2 ist eine Brennstoffheizung 8 z.B. mit Gasbrenner zur Tiegelheizung eingesetzt. Als reaktives Vergasungsmittel werden, nebst allfälligen zusätzlichen, die Rauchgase 38 der Brennstoffheizung 8 eingesetzt. Die Produktgase 46 werden abgeführt und gereinigt 56, in einem Gasometer 57 gespeichert und über eine Leitung 58 schliesslich als Brennstoff der Tiegelheizung 8 verwertet. Weitere Energieeinsparungen werden in diesem Beispiel erzielt durch Vorwärmen der Brennerluft 48 in einem Wärmetauscher 55, welcher durch die Brennerrauchgase 38 beheizt ist. Aus einem Gemisch von anorganischen Reststoffen können sich z.B. zwei Schmelzeschichten ausbilden, eine schwerere, metallisch-sulfidische Schicht 13 und eine darüberliegende glasartige, z.B. silikatische Schicht 14. Diese werden je separat über zwei Abführleitung 17, 18 abgeführt, abgekühlt und gesammelt 31, 32, z.B. zur Wiederverwertung der metallisch-sulfidischen Stoffe 31 und zum Deponieren der inertisierten glasartigen Rückstände 32. Die Abführleitungen können durch ein Ventilsystem 20 kontrolliert sein, z.B. durch einen Siphon 22 oder ein beheizbares Gefrierventil 23 und einen Ueberlauf 21 wie in Fig. 3. Dort ist ein Beispiel gezeigt, wo das Vergasungsmittel 4 direkt in die Schmelze hineingeführt wird (42), um eine besonders intensive Reaktion zu erhalten. Die Zuführung 42 des Vergasungsmittels kann dabei von oben in die Schmelze eintauchend oder auch von unten her am Boden des Tiegels 11 erfolgen. Trennwände oder Trennelemente 37 teilen den Tiegelraum in eine Reaktionszone 35 und eine Beruhigungszone 36. Die Produktgase 46 werden hier zur Heizung des Tiegels 11 eingesetzt, indem sie über einen Austritt 47 in den Brennraum hinaustretend dort verbrannt werden. Die Reststoffe werden über eine Vorheizstufe 5 mit einer Heizung 6 geführt, in der schon reaktive Vergasungsmittel 41 zugegeben werden. Die Vorheizstufe 5 wird hier durch Rauchgase 38 auf eine Temperatur T1 (von z.B. 400^{o}C bis 900^{o}C) aufgeheizt, welche unter der Einschmelztemperatur TS im Tiegel 11 (von z.B. 1000^{o}C bis 1500^{o}C) liegt. Die Durchlaufzeit der Reststoffe durch die Vorheizstufe 5 kann dabei grösser sein als deren Verweilzeit im Tiegel 11, womit ein relativ rasches Einschmelzen erreicht werden kann. Ein Aufheiz- und Stützbrenner 49 ergänzt die Produktgasheizung 47.

Mit der Erfindung können Reststoffe beliebiger Form z.B. auch als feines Pulver oder mit flüssigen Komponenten verarbeitet werden. Es kann je nach Bedarf auch die ganze oder ein grosser Teil der Prozesswärme indirekt von aussen zugeführt werden. Dadurch kann z.B. auch mit kleinen exothermen Vergasungsmittelmengen gearbeitet und somit ein energiereiches Produktgas erzeugt werden. Es ist also auch nicht notwendig, z.B. mit reinem Sauerstoff zu arbeiten, was sehr teuer ist. Weiter können auch endotherme Vergasungsmittel wie Wasserdampf eingesetzt werden, womit ein besonders energiereiches Vergasungsprodukt entsteht.

## Patentansprüche

1. Verfahren zum kontinuierlichen Einschmelzen von Reststoffen, welche organische und anorganische Komponenten enthalten, dadurch gekennzeichnet, dass die Reststoffe (1) in einer Heizeinrichtung (10) mit einem Einschmelztiegel (11) indirekt auf eine Temperatur TS aufgeheizt werden, dass die organischen Komponenten durch Zugabe mindestens eines reaktiven Vergasungsmittels (4) beim Aufheizen vergast und die produzierten Gase (46) abgezogen werden, dass die verbleibenden anorganischen Reststoffe anschliessend im Tiegel (11) auf eine Einschmelztemperatur TS gebracht werden, welche mindestens ihrer Fliesstemperatur entspricht und dass die anorganischen Komponenten anschliessend abgezogen und durch Abkühlung in einen inerten, festen Endzustand (26) gebracht werden.

2. Verfahren nach Anspruch 1, dadurch gekennzeichnet, dass die Reststoffe zuerst in einer Vorheizstufe (5) unter Zugabe des reaktiven Vergasungsmittels (4) aufgeheizt und anschliessend im Tiegel (11) eingeschmolzen werden.

3. Verfahren nach Anspruch 2, dadurch gekennzeichnet, dass die Durchlaufzeit der Reststoffe durch die Vorheizstufe (5) grösser ist als deren Verweilzeit im Tiegel (11).

4. Verfahren nach einem der vorangehenden Ansprüche, dadurch gekennzeichnet, dass das Vergasungsprodukt (46) zum Aufheizen der Reststoffe (1) eingesetzt wird.

5. Verfahren nach einem der vorangehenden Ansprüche, dadurch gekennzeichnet, dass als Vergasungsmittel (4) Wasser, Luft, O₂ oder CO₂ verwendet werden.

6. Verfahren nach einem der vorangehenden Ansprüche, dadurch gekennzeichnet, dass Wasser als Vergasungsmittel (4) mit den Reststoffen zugeführt wird, z.B. als Slurry.

7. Verfahren mit einer Brennstoffheizung (8) nach einem der vorangehenden Ansprüche, dadurch gekennzeichnet, dass die Rauchgase (38) der Brennstoffheizung als Vergasungsmittel (4) eingesetzt werden.

8. Verfahren nach einem der vorangehenden Ansprüche, dadurch gekennzeichnet, dass die Vergasungsprodukte (46) durch die heissen Bereiche des Tiegels hindurchgeführt und erst anschliessend abgezogen werden.

9. Verfahren nach einem der vorangehenden Ansprüche, dadurch gekennzeichnet, dass die Aufheiztemperatur TS maximal 1 600^{o}C beträgt.

10. Vorrichtung zum Einschmelzen von Reststoffen gemäss Verfahren nach einem der vorangehenden Ansprüche, gekennzeichnet durch eine indirekte Heizeinrichtung (10) mit einer Zuführung (2) für die Reststoffe, einer Zuleitung (41) für ein Vergasungsmittel (4), mit einem Tiegel (11) und einer Tiegelheizung (9), mit einer Abgasleitung (45) zur Ableitung der Vergasungsprodukte (46) und einer Schmelzeabführleitung (16) aus dem Tiegel.

11. Vorrichtung nach Anspruch 10, dadurch gekennzeichnet, dass die Heizeinrichtung mindestens eine Vorheizstufe (5) mit einer Vorwärmtemperatur T1 aufweist, welche unter der Einschmelztemperatur TS liegt.

12. Vorrichtung nach Anspruch 10 oder 11, gekennzeichnet durch eine Zuleitung für das Vergasungsmittel, welche in die Schmelze hineinführt (42).

13. Vorrichtung nach Anspruch 10 bis 12, dadurch gekennzeichnet, dass im Tiegel mindestens eine Trennwand (37) vorgesehen ist.

14. Vorrichtung nach einem der Ansprüche 10 bis 13, dadurch gekennzeichnet, dass der Tiegel (11) in eine Reaktionszone (35) und eine Beruhigungszone (36) unterteilt ist.

15. Vorrichtung nach einem der Ansprüche 10 bis 14, dadurch gekennzeichnet, dass das Volumen des Schmelztiegels (11) maximal 0.5 m³ beträgt.

16. Vorrichtung nach einem der Ansprüche 10 bis 15, dadurch gekennzeichnet, dass der Schmelztiegel (11) mindestens zwei Abführleitungen (17, 18) für übereinanderliegende ungleich schwere Schmelzeschichten (13, 14) auf unterschiedlichen Niveaus aufweist.
